(19) Europäisches Patentamt
European Patent Office
Office européen des brevets

(11) **EP 3 006 932 B1**

(12) **EUROPEAN PATENT SPECIFICATION**

(45) Date of publication and mention
of the grant of the patent:
**09.05.2018 Bulletin 2018/19**

(21) Application number: **14893694.1**

(22) Date of filing: **12.11.2014**

(51) Int Cl.:
***G01N 27/87*** (2006.01)

(86) International application number:
**PCT/RU2014/000858**

(87) International publication number:
**WO 2016/003314 (07.01.2016 Gazette 2016/01)**

(54) **TRANSVERSE-MAGNETIZATION MAGNETIC SYSTEM FOR INTRA-PIPE DEFECTOSCOPE**

MAGNETSYSTEM MIT TRANSVERSER MAGNETISIERUNG FÜR ROHRINTERNES DEFEKTOSKOP

SYSTÈME MAGNÉTIQUE DE MAGNÉTISATION TRANSVERSALE POUR DÉFECTOSCOPE INTRA-TUBULAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2014 RU 2014126248**

(43) Date of publication of application:
**13.04.2016 Bulletin 2016/15**

(73) Proprietors:
• **Public Joint Stock Company "Transneft"
Moscow 119180 (RU)**
• **Joint Stock Company "Transneft Diascan"
g. Lukhovitsy, Moskovskaya obl. 140501 (RU)**

(72) Inventors:
• **MIROSHNIK, Aleksandr Dmitrievich
Moskovskaya obl., Kolomna 140406 (RU)**

• **CHERNYSHOV, Oleg Grigoryevich
Moskovskaya obl., Kolomna 140406 (RU)**
• **CHERTORIZHSKY, Roman Yuryevich
Moskovskaya obl., Kolomna 140404 (RU)**
• **MEDELEV, Pavel Anatolyevich
Moskovskaya obl., Kolomna 140411 (RU)**

(74) Representative: **Glawe, Delfs, Moll
Partnerschaft mbB
von Patent- und Rechtsanwälten
Postfach 13 03 91
20103 Hamburg (DE)**

(56) References cited:
EP-A2- 2 249 355     RU-C1- 2 225 977
RU-C1- 2 225 977     RU-C1- 2 248 498
RU-C1- 2 248 498     RU-U1- 109 863
RU-U1- 109 863

**Description**

This invention relates to the field of magnetic flaw detection, namely to devices used for non-destructive testing of pipelines, and, in particular, to a magnetic system of an in-pipe flaw detector.

An in-pipe flaw detector is known (RU Patent No. 2225977, publ. 27.05.2003, IPC G01M3/08, F17D5/00, G01N27/72), which sensors are arranged in respective holders, each holder being fixed in the flaw detector housing with the use of a pair of arms capable of rotating in a plane crossing the axis of symmetry of the magnetic flaw detector. The invention enables to improve the flaw detector capacity of passing through long, curved, narrowed regions in a pipeline and to reduce a volume of data not suitable for identifying flaws in a pipeline wall; but, due to irregular distribution of a magnetic field in circumferential and longitudinal directions, this flaw detector provides errors while determining flaw dimensions.

An in-pipe flaw detector is known (RU Patent No. 2248498, publ. 29.10.2003, IPC F17D5/00, G01M3/00), which non-destructive testing sensors are arranged in respective sensor holders, each sensor holder being fixed in the flaw detector housing with the use of at least two arms. On the arm or the sensor holder at the flaw detector nose portion, one or more elements are arranged that are made capable of bending toward the tail portion in a plane passing through the axis of symmetry of the flaw detector. The use of this flaw detector enables to improve the flaw detector capacity of passing through long, curved, narrowed regions in a pipeline and to reduce a volume of data not suitable for identifying flaws in a pipeline wall; but, due to irregular distribution of a magnetic field in circumferential and longitudinal directions, this flaw detector provides errors while determining flaw dimensions.

The closest prototype for the claimed invention is a magnetic measuring system with transverse magnetization for an in-pipe flaw detector (RU Patent No. 109863, publ. 27.05.11, IPC G01N27/83), which consists of identical magnetic modules for transverse magnetization in the form of two annular belts arranged symmetrically relative to the central axis of a hollow cylindrical base, one after the other, on spring-loaded articulated arms coupled to the hollow cylindrical base, meanwhile one or more additional permanent magnets in the form of a rectangular parallelepiped are arranged in the interpolar space of each magnetic module for the purpose of improving uniformity of magnetic field distribution.

The technical effect of the claimed utility model consists in reducing flaw detection errors due to mutual influence of the magnetic module main belts, thus improving uniformity of magnetic field distribution in circumferential and longitudinal directions.

The technical effect of the claimed invention is achieved due to the fact that the magnetic system for transverse magnetization having fixed magnetic modules and designed for an in-pipe flaw detector consists of two main and four additional magnetic module belts arranged on two magnetic conductors connected by a non-magnetic insert. Each magnetic module consists of permanent magnets and ferromagnetic elements transferring a magnetic flux to the pipeline wall. The adjacent poles of magnetic modules on the same belt are of the same polarity. The main poles of the magnetic modules are angularly offset relative to each other by the angle φ:

$$\varphi = 180°/N,$$

where N is a number of magnetic modules in a single belt. Sensors, which register any change in magnetic induction, as caused by a change in the pipeline wall thickness, are arranged between magnetic poles along the length of a pipeline circumference.

The additional belts of magnetic modules are arranged at the edges of the main belts of the magnetic modules; two additional belts of magnetic modules are arranged between the main belts of magnetic modules and serve for compensating mutual influence of a magnetic field generated by the main belts of magnetic modules and for decreasing non-symmetry of a magnetic field which symmetry is caused by close location of the main belts of magnetic modules. Each additional belt of magnetic modules is angularly offset relative to a main magnetic belt by an angle α<90° for the purpose of correcting non-symmetry of a magnetic field.

In order to reduce errors, a pipeline material is magnetized to the condition of technical saturation, since with an increase in magnetization intrinsic noises of a pipeline material as well as sensitivity of the flaw detector measuring system to a pipeline material are reduced.

In a development of the invention, the magnetic system for transverse magnetization having fixed magnetic modules for an in-pipe flaw detector may be made of a single section and of a plurality of sections, and in this case it may comprise two or more main belts of magnetic modules and four or more additional belts of magnetic modules that are arranged on two or more magnetic conductors, and in this case a cardan joint may be substituted for the non-magnetic insert.

As a result, flaw detection errors are reduced due to decrease in mutual influence of the main belts of magnetic modules and improvement of magnetic field distribution in circumferential and longitudinal directions.

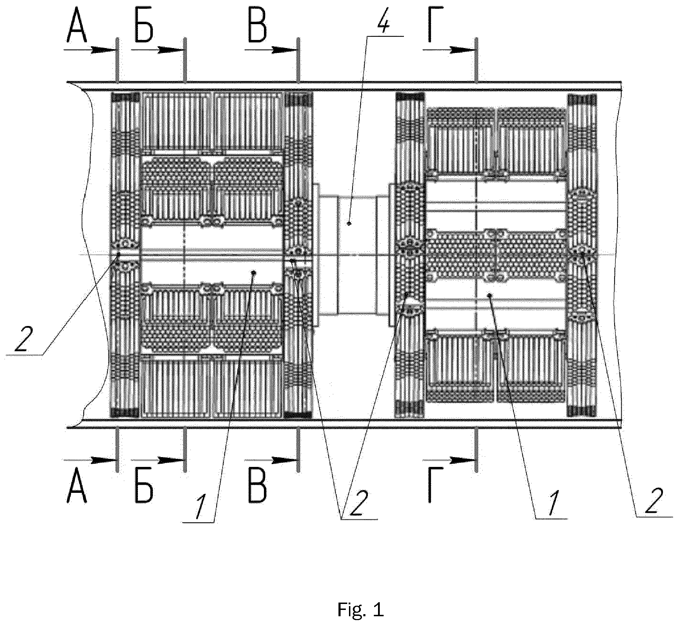

Fig. 1 shows a general view of the magnetic system for transverse magnetization having fixed magnetic modules and designed for an in-pipe flaw detector.

The following designations are used in Fig. 1:

    1.- main belt of magnetic modules;
    2.- additional belt of magnetic modules;
    4.- non-magnetic insert.

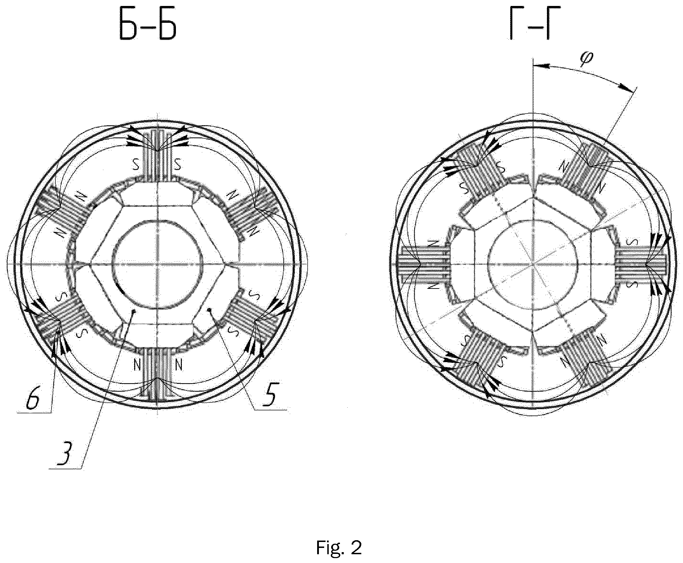

Fig. 2 shows cross-sectional views of the main magnetic modules used in the magnetic system for transverse magnetization having fixed magnetic modules and designed for an in-pipe flaw detector.

The following designations are used in Fig. 2:

3.- magnetic conductor;
5.- permanent magnet;
6.- elements made of a ferromagnetic material.

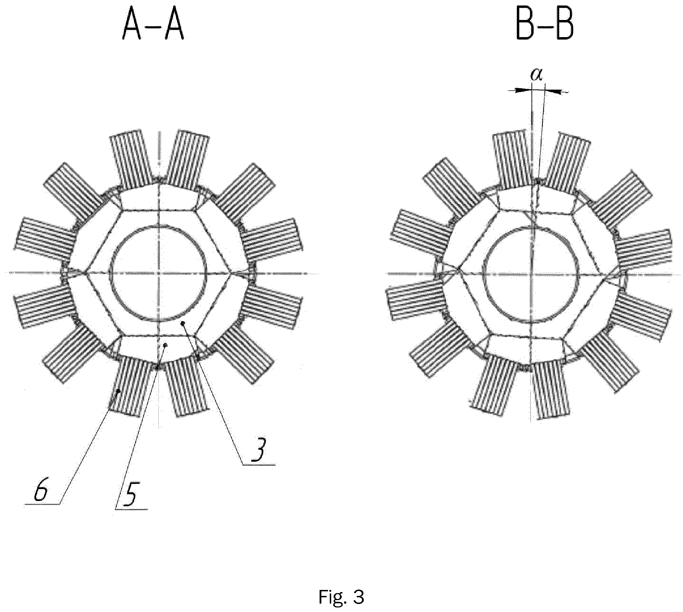

Fig. 3 shows cross-sectional views of the additional magnetic modules used in the magnetic system for transverse magnetization having fixed magnetic modules and designed for an in-pipe flaw detector.

The following designations are used in Fig. 3:

3- magnetic conductor;
5- permanent magnet;
6- elements made of a ferromagnetic material.

The magnetic system for transverse magnetization having fixed magnetic modules and designed for an in-pipe flaw detector (Fig. 1) consists of two main belts of magnetic modules 1 (Fig. 1) and four additional belts of magnetic modules 2 (Fig. 1), which are arranged on two magnetic conductors 3 (Fig. 2 and Fig. 3) connected with a non-magnetic insert 4 (Fig. 1). The magnetic modules 1 and 2 (Fig. 1) consist of permanent magnets 5 (Fig. 2 and Fig. 3) and elements 6 made of a ferromagnetic material (Fig. 2 and Fig. 3).

## Claims

1. A magnetic system for transverse magnetization having fixed magnetic modules and designed for an in-pipe flaw detector, consisting of two main (1) and four additional (2) belts of magnetic modules that are arranged on two magnetic conductors (3) connected with a non-magnetic insert (4), each magnetic module consisting of permanent magnets (5) and elements made of a ferromagnetic material (6), wherein said elements transfer a magnetic flux into a pipeline wall, and adjacent poles of magnetic modules on the same belt are of the same polarity, and wherein

i) the additional belts of magnetic modules (2) arranged at the edges of the main belts of magnetic modules (1), two additional belts of magnetic modules (2) being arranged between the main belts (1),
ii) the main poles of the magnetic modules of the first belt (1) are arranged angularly offset with respect to the main poles of the magnetic modules of the second belt (2),
iii) each additional belt (2) of magnetic modules is angularly offset relative to a main magnetic belt (1) by an angle of $\alpha < 90°$.

2. The magnetic system for transverse magnetization having fixed magnetic modules and designed for an in-pipe flaw detector according to Claim 1, **characterized in that** sensors registering any change in magnetic induction, as caused by a change in a pipeline wall thickness, are arranged along the pipeline circumference.

## Patentansprüche

1. Magnetisches System zur transversalen Magnetisierung mit fixierten Magnetmodulen und gestaltet für einen in-Rohr-Prüfdetektor, bestehend aus zwei Haupt- (1) und vier Zusatz-(2) Gürteln von magnetischen Modulen, die auf zwei magnetischen Leitern (3) verbunden mit einem nicht-magnetischem Einsatz (4) angeordnet sind, wobei jedes Magnetmodul aus zwei Permanentmagneten (5) und aus ferromagnetischen Material hergestellten Elementen (6) besteht, wobei besagte Elemente einen Magnetfluss in eine Rohleitungswand übertragen und benachbarte Pole von Magnetmodulen auf demselben Gürtel von gleicher Polarität sind, und wobei

i) die Zusatzgürtel (2) von magnetischen Modulen an den Rändern der Hauptgürtel (1) von magnetischen Modulen angeordnet sind, wobei zwei Zusatzgürtel (2) von magnetischen Modulen zwischen den Hauptgürteln (1) angeordnet sind,
ii) die Hauptpole der Magnetmodule des ersten Gürtels (1) in Bezug auf die Hauptpole der Magnetmodule des zweiten Gürtels (2) winkelversetzt angeordnet sind,
iii) jeder Zusatzgürtel (2) von Magnetmodulen in Bezug auf einen Hauptmagnetgürtel (1) in einem Winkel von a<90° winkelversetzt ist.

2. Magnetisches System zur transversalen Magnetisierung mit fixierten Magnetmodulen und gestaltet für einen in-Rohr-Prüfdetektor nach Anspruch 1, **dadurch gekennzeichnet, dass** entlang des Rohrleitungsumfangs Sensoren angeordnet sind, die jegliche durch eine Veränderung der Rohrleitungswandstärke hervorgerufene Änderung der magnetischen Induktion registrieren.

## Revendications

1. Système magnétique pour aimantation transversale ayant des modules magnétiques fixes et conçu pour un détecteur de failles depuis l'intérieur d'un tube, constitué de deux ceintures principales (1) et de quatre ceintures additionnelles (2) de modules magnétiques qui sont agencés sur deux conducteurs magnétiques (3) connectés à un insert non magnétique (4), chaque module magnétique étant constitué avec des aimants permanents (5) et des éléments réalisés en matériau ferromagnétique (6), dans lequel lesdits éléments transfèrent un flux magnétique vers l'intérieur d'une paroi d'un pipeline, et des pôles adjacents de modules magnétiques sur la même ceinture ont la même polarité, et dans lequel

     i) les ceintures additionnelles de modules magnétiques (2) sont agencées au niveau des bordures des ceintures principales de modules magnétiques (1), deux ceintures additionnelles de modules magnétiques (2) étant agencées entre les ceintures principales (1),

     ii) les pôles principaux des modules magnétiques de la première ceinture (1) sont agencés avec un décalage angulaire par rapport aux pôles principaux des modules magnétiques de la seconde ceinture (2),

     iii) chaque ceinture additionnelle (2) de module magnétique est agencée avec un décalage angulaire par rapport à une ceinture magnétique principale (1), d'un angle $\alpha < 90°$.

2.   Système magnétique pour aimantation transversale ayant des modules magnétiques fixes et conçu pour un détecteur de failles depuis l'intérieur d'un tube, selon la revendication 1, **caractérisé en ce que** des capteurs qui enregistrent tout changement de l'induction magnétique, comme ceux provoqués par un changement dans l'épaisseur d'une paroi d'un pipeline, sont agencés le long de la circonférence du pipeline.

Fig. 1

Б–Б

Г–Г

Fig. 2

A–A   B–B

Fig. 3

**EP 3 006 932 B1**

**REFERENCES CITED IN THE DESCRIPTION**

**Patent documents cited in the description**

- RU 2225977
- RU 2248498
- RU 109863